# EUROPEAN PATENT SPECIFICATION

(11) **EP 4 384 038 B1**
(45) Date of publication and mention of the grant of the patent: **25.03.2026**
(21) Application number: 22773330.0
(22) Date of filing: 09.08.2022
(51) Int. Cl.: A42B 3/12, A42B 3/06

(54) **DEVICE FOR ABSORBING SHOCKS ON HELMETS AND CORRESPONDING HELMET**
VORRICHTUNG ZUR DÄMPFUNG VON STÖSSEN AUF HELME UND ENTSPRECHENDER HELM
DISPOSITIF D'ABSORPTION DES CHOCS SUR DES CASQUES ET CASQUE CORRESPONDANT

(30) Priority: 10.08.2021 IT 202100021623
(43) Date of publication of application: 19.06.2024
(73) Proprietor: Alma Mater Studiorum Universita di Bologna, 40126 Bologna (IT)
(72) Inventor: COLONNA, Martino, 40131 BOLOGNA (IT); PARISI, Mariafederica, 40131 BOLOGNA (IT); LA FAUCI, Giuseppe, 40131 BOLOGNA (IT)
(74) Representative: Petraz, Gilberto Luigi
(86) International application number: PCT/IT2022/050228
(87) International publication number: WO 2023/017552

(56) References cited:
- US-A1- 2015 345 585
- US-A1- 2017 172 242
- US-A1- 2019 335 838
- US-A1- 2020 221 807

## Description

### FIELD OF THE INVENTION

The present invention concerns a device for absorbing shocks on helmets and a helmet equipped with this device.

In particular, the shock-absorbing device is intended to be put inside the structure of the helmet, the latter being of any type whatsoever, for example a motorcycle helmet, a helmet for sporting activities, construction sites or suchlike.

### BACKGROUND OF THE INVENTION

It is known that the most dangerous shocks to a motorcyclist's head, for example, are the tangential ones, since they cause a rotational acceleration which in turn can cause various damage to the head or brain.

To better protect against this type of impacts, devices for absorbing shocks have been developed configured to have a part that moves with the head, associated with a second part that is connected to the helmet itself.

For example, EP2896308A1 shows such a device comprising two concentric caps, one solid with the head and one integral with the external shell of the helmet, so as to exploit the free rotation of the two caps. This system does not absorb or dissipate energy because the two caps are held together by thin elastomeric materials that are only able to postpone the moment when the acceleration reaches the brain, but not to absorb significant amounts of energy.

To improve the cushioning given by these devices, devices have been developed that use non-Newtonian fluids mixed with polymeric foams, the non-Newtonian fluids having the purpose of dissipating the energy of the impacts. Thanks to their behavior, which depends on the speed of the stress, these materials are able to allow an effective action of absorbing impacts, in particular those with perpendicular compression.

US7381460B2 describes an example of a foam containing non-Newtonian materials, in particular a borurated silicone. However, this material is not effective in dissipating shear stresses because the cells of expanded foams work effectively in compression, but not in traction or shearing.

More recently, helmets consist of an internal part, or liner, intended to be rested on the head, and an external part, or liner, that surrounds the internal part without being fixed to it. Several helmet manufacturers have developed devices based on polymer foams configured to connect the internal and external parts of the helmets together, in order to reduce rotational accelerations.

For example, US6658671B1 shows a helmet equipped with a layer of fluid interposed between the internal and external parts that allows to prevent friction on the asphalt in the event of a fall, but also the free rotation of the two parts with respect to each other.

US2021076769A1 describes an impact dissipating device for a construction site helmet in which the impacts are dissipated through a fluid that moves between airtight chambers, located between a head support and an external shell, through predefined passages. The fluid is designated as polydimethylsiloxane or water.

US2020281299A1 describes a helmet with an internal part, in contact with the head, which consists of a multitude of interconnected flexible cells which, in the event of an impact, compress and reciprocally transfer an unspecified fluid.

US2020221807A1 describes an American football helmet that uses a layer of non-Newtonian fluid encapsulated and positioned between a hard shell and an internal layer.

US2015345585A1 discloses a compensating damper comprising opposed working end faces, a hermetically sealed chamber between the working end faces and a set of plates in the chamber with a film of viscous fluid between each pair of adjacent plates. The damper has at least two different film thickness zones across the set of plates, each zone providing a different resistance response when acted upon by an outside force exerted on at least one of the opposed working end faces. Internal guide pins extend axially from the opposed working end faces for engaging the plate stack partially from each of the working end faces to increase the stroke.

One disadvantage of known devices is that they are not able to absorb and dissipate the energy of the impact, in particular of tangential impacts (but not only). This may be due to the flat and thin conformation of the layer of liquid present in the helmet.

Another disadvantage is that known devices are not reversible, that is, they do not return to their original form after having absorbed an impact.

There is therefore a need to perfect a device for absorbing impacts for helmets which can overcome at least one of the disadvantages of the state of the art.

In order to do this, it is necessary to solve the technical problem of creating a device for absorbing impacts that is able to effectively prevent rotational accelerations of the head.

In particular, one purpose of the present invention is to provide a device for absorbing impacts able to effectively absorb and dissipate impacts in any direction, in particular tangential ones.

Another purpose of the present invention is to provide a device which can be installed in existing helmets or in new helmets.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes and to resolve the above technical problem in a new and original way, also obtaining considerable advantages compared to the state of the prior art, a shock-absorbing device according to the present invention comprises a hermetically closed container filled with a shock-absorbing fluid and an interference element partly inserted inside the container in a mobile way, so that a head thereof is immersed in the shock-absorbing fluid. The container is configured to be attached to one of either the internal part or the external part of the helmet, while the interference element is configured to be attached to the other one of either the internal part or the external part of the helmet. In this way, the part of the interference element located inside the container, that is, immersed in the shock-absorbing fluid, interferes with it and generates shear and compression stresses in any direction it moves, both perpendicularly to the container and also tangentially.

When the interference element moves, its movement, regardless of its direction, is dampened by the shock-absorbing fluid, which absorbs part of the energy caused by the movement of the interference element, that is, the impact suffered. The shock-absorbing fluid can be Newtonian or non-Newtonian, the latter being the preferred alternative. In particular, the non-Newtonian shock-absorbing fluid can be of the dilating type (also called shear thickening) or pseudoplastic type (also called shear thinning).

In accordance with the invention, the container comprises an elastically deformable wall, and the interference element is made to pass through this elastically flexible wall. Preferably, the elastically flexible wall comprises a plurality of folds concentric with each other and with the interference element, preferably they are circular. These folds allow the interference element to move both tangentially to the container and also perpendicularly to it. Preferably, the interference element is positioned in the center of the elastically deformable wall.

In accordance with some embodiments, the container comprises a removable lid which comprises the elastically deformable wall.

Preferably, the head of the interference element immersed in the shock-absorbing fluid has a lateral size larger than the rest of the interference element. In this way, the head is also wider than the hole made in the wall of the container, preventing the interference element from coming out of the container by traction.

Advantageously, the device also comprises a clamping member inserted around the interference element outside the container and able to block the position of the interference element with respect to the wall of the container in which it is made to pass.

In accordance with some embodiments, the container comprises a bottom wall from which at least one lateral wall extends transversely, preferably perpendicularly, forming an internal space for containing the non-Newtonian fluid. The flexible wall is advantageously parallel to the base wall, so as to allow a wider movement of the interference element.

The bottom wall can be flat or curved or dome-shaped, in order to better match the shape of the internal part of a helmet. In the curved or domed shape, the convexity of the bottom wall is advantageously oriented toward the inside of the container. Even with the curved or dome-shaped bottom wall it is preferable that the flexible wall is in any case parallel or substantially parallel to the bottom wall, and therefore it is preferable that the flexible wall is also curved or dome-shaped, but with the convexity advantageously oriented toward the outside of the container. In this way, the flexible wall, in its rest position, better matches the shape of the external part of the helmet.

According to one aspect, there is also provided a helmet comprising an internal component, to be placed resting on the head of a user, and an external component that wraps around the internal component and is mobile with respect to it, and at least one shock-absorbing device as described above. In particular, the container is attached to one of either the internal component or the external component, and the interference element is attached to the other one of either the internal component or the external component of the helmet.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional view of the device for absorbing tangential impacts, in a rest position;
- fig. 2 is a radial section view of the device of fig. 1;
- fig. 3 is a plan view of the device of fig. 1 in a configuration deformed due to an impact;
- figs. 4, 5 and 6 are radial section views of the device of fig. 1 in three different configurations deformed due to three different impacts;
- figs. 7a and 7b are lateral views of a component of the device of fig. 1 according to some embodiments described here;
- fig. 8 is a lateral section view of a helmet equipped with a plurality of devices as in fig. 1;
- fig. 9 is a partly sectioned three-dimensional view of the helmet of fig. 8;
- fig. 10 is a radial section view of the device for absorbing tangential impacts according to one variant, in a rest position;
- fig. 11 is a lateral section view of a helmet equipped with a plurality of devices as in fig. 10; and
- figs. 12 and 13 are graphs representing the results of two shock-absorbing tests with the device of fig. 1.

We must clarify that in the present description the phraseology and terminology used, such as for example the terms horizontal, vertical front, rear, high, low, internal and external, with their declinations, have the sole function of better illustrating the present invention with reference to the attached drawings and must not be in any way used to limit the scope of the invention itself, or the field of protection defined by the attached claims.

Furthermore, the people of skill in the art will recognize that certain sizes or characteristics in the drawings may have been enlarged, deformed, or shown in an unconventional or non-proportional way in order to provide a version of the present invention that is easier to understand. When sizes and/or values are specified in the following description, the sizes and/or values are provided for illustrative purposes only and must not be construed as limiting the scope of protection of the present invention, unless such sizes and/or values are present in the attached claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

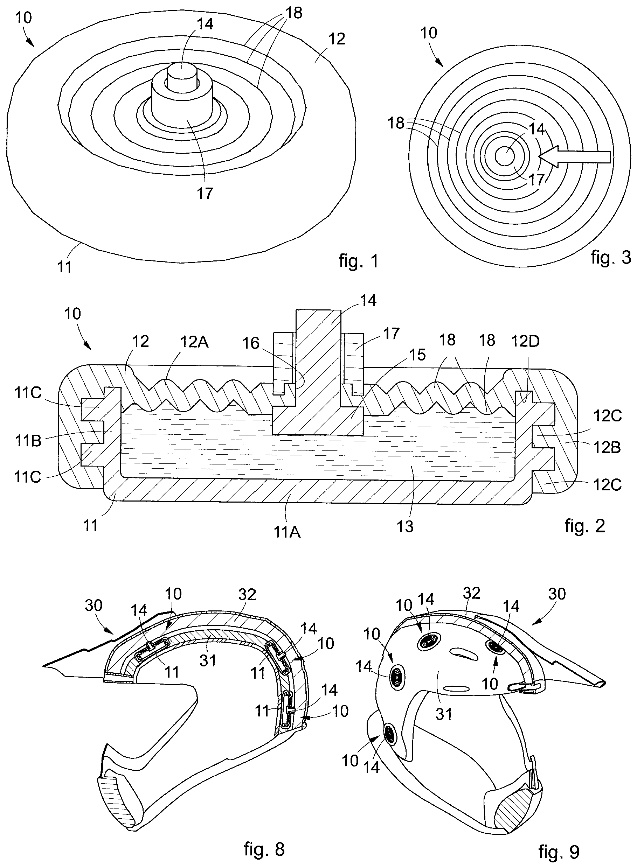

With reference to fig. 1, a shock-absorbing device 10 according to the present invention comprises a container 11 closed by a lid 12, which forms a wall thereof, and a shock-absorbing fluid 13 inside the container 11. The shock-absorbing fluid 13 can be of the Newtonian type, but preferably it is of the non-Newtonian type, that is, its viscosity varies according to the shear force applied to it. The non-Newtonian version of the shock-absorbing fluid can be of any type whatsoever, dilating or pseudoplastic.

The device 10 also comprises a rod 14 inserted through the lid 12 in such a way as to have a head 15 thereof placed inside the container 11, immersed in the shock-absorbing fluid 13 (fig. 2). Obviously, the rod 14 is inserted in a sealed manner, therefore in a through hole 16 made in the lid 12 and with a diameter equal to the diameter of the rod 14. Advantageously, the immersed head 15 is conformed as a disk so as to increase the contact surface with the shock-absorbing fluid 13 and thus optimize the shock-absorbing effects during an impact. Furthermore, since the head 15 has a larger diameter than the rod 14 itself, and therefore also larger than the through hole 16, it is not possible to extract it 14 by pulling it toward the outside of the container 11.

In order to block the position of the rod 14 with respect to the lid 12, a clamping sleeve 17 is also provided, inserted around the rod 14 and outside the container 11, so that the portion of the lid 12 around the through hole 16 is pressed between the head 15 of the rod on its internal surface, and by the clamping sleeve 17 on its external surface. The clamping sleeve 17 can be equipped with an internal thread able to cooperate with a thread provided on the external surface of the rod 14, for example.

Thanks to the rod 14, and above all thanks to its head 15 immersed in the shock-absorbing fluid 13 inside the container 11, the shock-absorbing fluid 13 is also able to absorb the energy of shocks that are tangential with respect to the device 10 (fig. 3-6). To achieve this result, the lid has to be elastically deformable in order to allow the movement of the rod 14 in the shock-absorbing fluid 13, and the rod 14 to automatically return to its starting position when the shock is over.

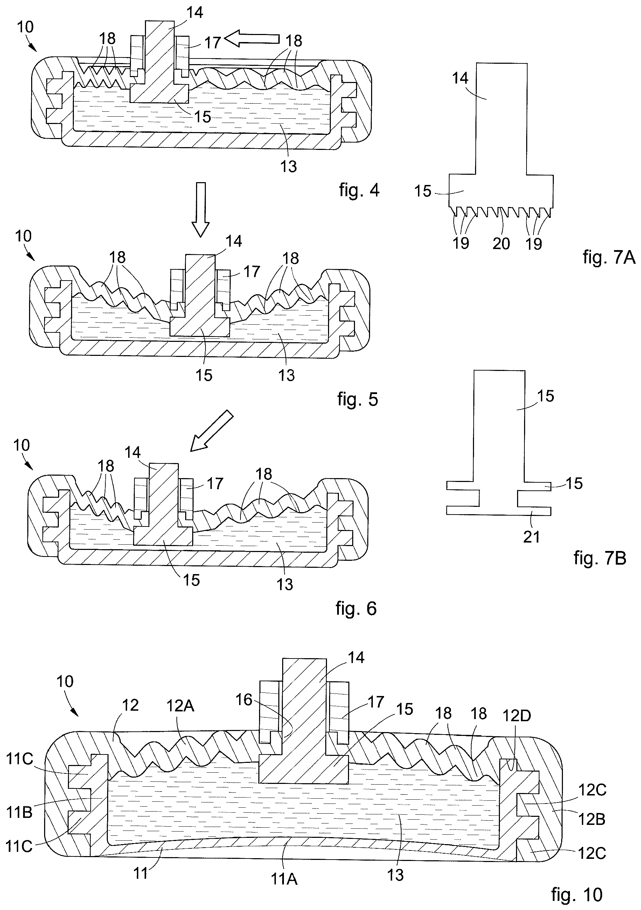

Particularly advantageously, the lid comprises a plurality of folds 18 concentric with each other and with respect to the rod 14 (fig. 2). This configuration of the lid 12 allows the rod 14 to move in any direction whatsoever, not only in the lid's 12 plane (fig. 4) but also outside of it (fig. 5 and 6), so as to also absorb the shocks perpendicular to the device 10 itself. The device 10 is also capable of absorbing mixed shocks, that is, shocks that have both a perpendicular component as well as a tangential component, as shown in fig. 6.

As can be seen from figs. 3, 4 and 6, a tangential displacement of the rod 14, that is, with a component contained in the lid's 12 plane, causes the squashing of the folds 18 in the zone downstream of the displacement of the rod 14 (between the rod 14 and the portion of the external edge of the lid from which it approaches) and the distension of the folds 18 in the zone upstream.

The lid 12 is configured to close the container 11 in a sealed manner in order to prevent any loss of shock-absorbing fluid. In particular, the container is of the type comprising a bottom wall 11A and a lateral wall 11B that extends perpendicularly from the external edge of the bottom wall 11A. Two circumferential teeth 11C, parallel to each other, extend perpendicularly from the external surface of the lateral wall 11B.

Similarly, the lid 12 has a closing wall 12A, a lateral wall 12B that extends perpendicularly from the external edge of the closing wall 12A and two circumferential teeth 12C that extend perpendicularly from the internal surface of the lateral wall 12B. The teeth 12C of the lid 12 are configured to create a same-shape coupling with the teeth 11C of the container 11.

In correspondence with the external edge of the closing wall 12A, the lid also comprises a circular groove 12D made in its internal surface and configured to house the free edge of the lateral wall 11A of the container 11, thus creating the seal of the closure.

Advantageously, the lid 12 is made of an elastically deformable material, for example silicone, a thermoplastic elastomer (for example thermoplastic polyurethane TPU or thermoplastic polyethylene TPE), a chemically cross-linked elastomer (for example a vulcanized rubber) or a physically cross-linked elastomer (for example a styrene-butadiene-styrene copolymer SBS or styrene-ethylenebutylene-styrene copolymer SBES).

In order to increase the shock-absorption caused by the shock-absorbing liquid 13, it is possible to increase the contact surface between the head 15 of the rod 14 and the shock-absorbing liquid 13. For this purpose, figs. 7a and 7b show two variants of the rod 14, the heads 15 of which have a different conformation.

In particular, in a first variant, the head 15 has a plurality of protuberances 19 which protrude from its end surface 20 (fig. 7a). The protuberances can have any shape whatsoever, for example square, spherical, conical or pyramidal with a three or four-sided base. In a second variant, the head 15 is configured as two disks 21 parallel to each other and reciprocally distanced so that the shock-absorbing fluid 13 can flow between them (fig. 7b). These two variants can be combined with each other, providing a head 15 with the two discs 21 and with the end surface 20 covered with protuberances 19. A single disc 21 or more than two discs 21 distanced from and parallel to each other can be provided, according to requirements. Providing several discs allows to further increase the contact surface with the shock-absorbing fluid 13.

Figs. 8 and 9 show a helmet 30 equipped with a plurality of shock-absorbing devices 10 as described above. The helmet 30 shown is of the type for motorcyclists, but it is possible to provide other types of helmet, for example for construction sites, for cyclists or for other sports activities, as long as the helmet 30 comprises an internal component 31 to rest on the head of a user and an external component 32 located around the internal component 31 in such a way as to wrap it and mobile with respect to it.

As can be seen from figs. 8 and 9, the device 10 is designed to be located between the internal 31 and external 32 components of the helmet 30 so as to absorb the accelerations undergone by the external component 32 with respect to the internal component 31. The container 11 is attached to the external surface of the internal component 31, for example, it is inserted therein in a corresponding seating, while the rod 14 is attached to the internal surface of the external component 32. More advantageously, the rod is partly inserted in the external component 32 (figs. 8 and 9). Obviously, it is possible to provide the opposite, that is, that the container 11 is attached to the external component 32 and the rod 14 to the internal component 31 of the helmet 30.

An example of a device 10 has a circular shape, as shown in the drawings, with a diameter comprised between 2.5 and 3 cm for a height comprised between 0.4 and 1 cm, which corresponds to an internal volume comprised between 1.96 and 7.06 cm³. The travel of the head 15 of the rod 14 immersed in the shock-absorbing fluid 13 is comprised between 10 and 15 mm.

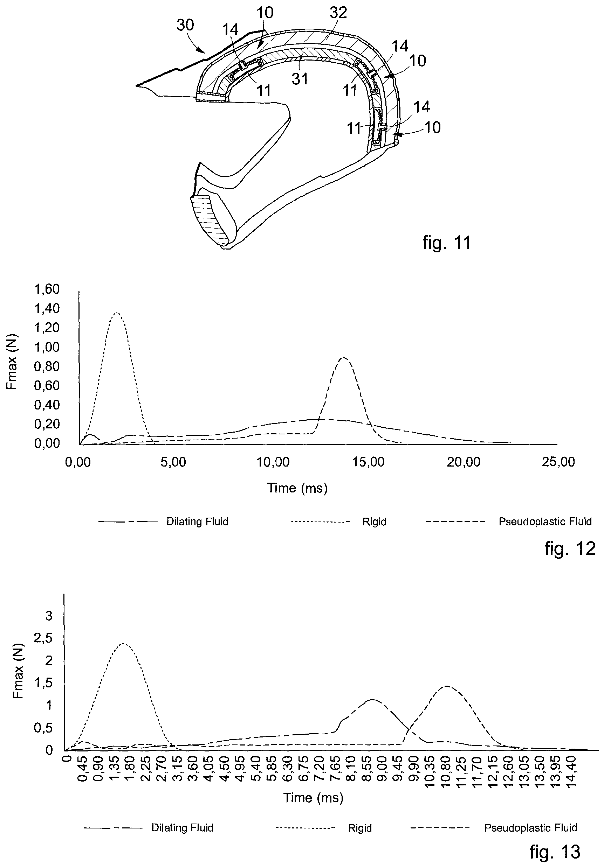

In the examples previously described the bottom wall 11 and the lid 12, in its rest configuration, are flat. Fig. 10 shows a variant of the shock-absorbing device 10 in which the bottom wall 11A is dome-shaped with the convexity facing the inside of the container 11. The lid 12 is also dome-shaped, but with the convexity facing the outside of the container 11. In this way, the bottom wall 11A and the lid 12 have a shape such as to coincide with the curvature of the surfaces of the internal component 31 of the helmet 30 and of the external component 32 of the helmet 30, respectively, as shown in fig. 11.

If the container 11 is to be connected to the external component 32 and the lid 12 is to be connected to the internal component 31 of the helmet 30, their convexities will be adapted accordingly, that is, the convexity of the bottom wall 11A is oriented toward the outside, while the convexity of the lid 12 is oriented toward the inside of the container 11.

Please note that the bottom walls 11A of the three devices 10 shown each have their own radius of curvature or camber, since the surfaces of the internal 31 and external 32 components have a different curvature depending on the position in which it is measured. Similarly, the lids 12 of the three devices 10 depicted have curvatures different from each other and adapted to the curvature of the surface of the external component 32 where each device 10 is positioned.

In the curved or dome-shaped version, the device 10 can have a circular shape and sizes equal to the flat version described above.

In order to assess the effectiveness of the device 10, in particular its ability to dissipate energy, impact tests were carried out on a test system that simulates the behavior of the shear component of the device 10 alone. The test system was of the "drop weight" type and provides to let a mass, called impacting mass, drop on an anvil equipped with a discoidal impactor with a diameter of 12.7 mm and a thickness of 2.6 mm. The other end of the anvil is conformed as the head 15 of the rod 14, or at least to have the same contact surface with the shock-absorbing fluid, and it is inserted inside a closed chamber configured in such a way that the end of the anvil has a travel of 12.5 mm.

The impactor is provided with a load cell to measure the force of the impact with the mass, the speed of which is measured using a known laser device.

The tests were carried out using an impacting mass of 1.3 kg, dropped from two different heights of 100 mm and 200 mm, with resulting energies of 1.275 J and 2.550 J, respectively, and final mass velocities of 1.31 m/s and 1.98 m/s. The tests were performed in three different configurations: with the chamber empty, with the chamber filled with a dilating non-Newtonian liquid (shear thickening) and with the chamber filled with a pseudoplastic non-Newtonian liquid (shear thinning). The dilating liquid used was polyboron dimethylsiloxane PBDMS, while the pseudoplastic liquid was a silicone elastomer generally used in shock dissipation systems for the transport sector.

Fig. 12 shows the forces measured by the load cell as a function of time in the test in which the impacting mass was released from a height of 100 mm. It can be seen that without any fluid in the chamber, a force peak is perceived immediately, that is, in less than 5 ms, with a force equal to about 1.40 N. In the presence of the dilating fluid, however, the force peak perceived amounts to about 0.25 N and occurs between 10 and 15 ms. With the pseudoplastic fluid, a load peak is felt after approximately 14 ms with a force equal to about 0.90 N, higher than what measured with the dilating fluid. This indicates that the pseudoplastic fluid absorbs a smaller amount of energy than the dilating fluid.

Fig. 13 shows the same forces, but measured in the test in which the impacting mass was released from a height of 200 mm, thus resulting in an impact with greater force.

Similarly to what was observed in the first test, in the absence of fluid in the chamber the force of the impact is felt immediately (after about 1.80 ms), the peak being measured at almost 2.5 N, which practically corresponds to all the energy acquired by the impacting mass. With the dilating fluid, a trend similar to that observed in the first test is observed up to 7.65 ms, after which a force peak occurs which rises to about 1.1 N. This behavior is explained by the fact that the time of 7.65 ms is the time required for the anvil to complete the 12.5 mm of travel in the shock-absorbing fluid during which the energy of the impact is absorbed. The "peak" observed immediately after corresponds to the energy of the impact that was not absorbed during the anvil's travel. With the pseudoplastic fluid, on the other hand, the behavior is similar to that observed in the first test, that is, a smaller force peak is observed compared to the empty chamber (1.5 N) in longer times (10.80 ms).

From the results disclosed above it is clear that the dilating fluid allows for a better absorption of the rotational energy of the impacts compared to the pseudoplastic fluid, which in turn allows it to absorb part of the energy as well. The dilating non-Newtonian fluid is therefore the preferred shock-absorbing fluid for the present invention.

On the basis of the above results, and considering that the tangential impact energy resulting from ECE 22.06 impact tests can be evaluated at about 25 J, it can be established that ten shock-absorbing devices 10 are required in a helmet 30 to absorb such energy.

It is clear that modifications and/or additions of parts may be made to the shock-absorbing device as described heretofore, without departing from the field and scope of the present invention, as defined by the claims.

It is also clear that, although the present invention has been described with reference to some specific examples, a person of skill in the art shall certainly be able to achieve many other equivalent forms of shock-absorbing device, having the characteristics as set forth in the claims and hence all coming within the field of protection defined thereby.

In the following claims, the sole purpose of the references in brackets is to facilitate reading and they must not be considered as restrictive factors with regard to the field of protection defined by the same claims.

## Claims

1. Shock-absorbing device (10), comprising a hermetically closed container (11) containing in turn a shock-absorbing fluid (13), **characterized in that** it comprises an interference element (14) partly inserted mobile inside said container (11) so that a head (15) thereof is immersed in said shock-absorbing fluid (13), **in that** said container (11) comprises an elastically deformable wall (12A), **and in that** said interference element (14) is made to pass through said elastically deformable wall (12A).

2. Device (10) as in claim 1, **characterized in that** said shock-absorbing fluid (13) is of the non-Newtonian type.

3. Device (10) as in claim 1, **characterized in that** said elastically deformable wall (12A) comprises a plurality of folds (18) concentric with each other and with said interference element (14).

4. Device (10) as in claim 1, 2 or 3, **characterized in that** said elastically deformable wall (12A) is comprised in a removable lid (12) of said container (11).

5. Device (10) as in any claim hereinbefore, **characterized in that** it comprises a clamping member (17) configured to be inserted around said interference element (14) outside said container (11).

6. Device (10) as in any claim hereinbefore, **characterized in that** said head (15) of said interference element (14) has a larger lateral size than said interference element (14).

7. Device (10) as in any claim hereinbefore, **characterized in that** said head (15) of said interference element (14) comprises an end wall (20) equipped with a plurality of protuberances (19).

8. Device (10) as in any claim hereinbefore, **characterized in that** said head (15) of said interference element (14) is configured as one or more disks (21) reciprocally distanced and parallel to each other.

9. Device (10) as in any claim hereinbefore, **characterized in that** said container (11) comprises a curved or dome-shaped bottom wall (11A).

10. Device (10) as in claim 9, **characterized in that** it comprises a lid (12) the wall of which is curved or dome-shaped.

11. Helmet (30) comprising an internal component (31) configured to be placed resting on the head of a user, and an external component (32) located around said internal component (22) so as to wrap it and be mobile with respect to it, **characterized in that** it comprises one or more shock-absorbing devices (10) as in any claim hereinbefore.

12. Helmet (30) as in claim 11, **characterized in that** the container (11) of said shock-absorbing device (10) is attached to said internal component (31) and the interference element (14) is attached to said external component (32).

## Patentansprüche

1. Stoßdämpfende Vorrichtung (10), die einen hermetisch geschlossenen Behälter (11) aufweist, der wiederum ein stoßdämpfendes Fluid (13) enthält, **dadurch gekennzeichnet, dass** sie ein Interferenzelement (14) aufweist, das teilweise in den Behälter (11) beweglich eingesetzt ist, so dass ein Kopf (15) davon in das stoßdämpfende Fluid (13) eintaucht, **dass** der Behälter (11) eine elastisch verformbare Wand (12A) aufweist, **und dass** das Interferenzelement (14) durch die elastisch verformbare Wand (12A) hindurchgeführt ist.

2. Vorrichtung (10) nach Anspruch 1, **dadurch gekennzeichnet, dass** das stoßdämpfende Fluid (13) nicht-newtonschen Typs ist.

3. Vorrichtung (10) nach Anspruch 1, **dadurch gekennzeichnet, dass** die elastisch verformbare Wand (12A) eine Mehrzahl von Falten (18) aufweist, die zueinander und zu dem Interferenzelement (14) konzentrisch sind.

4. Vorrichtung (10) nach Anspruch 1, 2 oder 3, **dadurch gekennzeichnet, dass** die elastisch verformbare Wand (12A) in einem abnehmbaren Deckel (12) des Behälters (11) umfasst ist.

5. Vorrichtung (10) nach einem der vorstehenden Ansprüche, **dadurch gekennzeichnet, dass** sie ein Klemmelement (17) aufweist, das ausgebildet ist, um außerhalb des Behälters (11) um das Interferenzelement (14) herum eingesetzt zu werden.

6. Vorrichtung (10) nach einem der vorstehenden Ansprüche, **dadurch gekennzeichnet, dass** der Kopf (15) des Interferenzelements (14) eine größere seitliche Abmessung als das Interferenzelement (14) aufweist.

7. Vorrichtung (10) nach einem der vorstehenden Ansprüche, **dadurch gekennzeichnet, dass** der Kopf (15) des Interferenzelements (14) eine Stirnwand (20) aufweist, die mit einer Mehrzahl von Vorsprüngen (19) versehen ist.

8. Vorrichtung (10) nach einem der vorstehenden Ansprüche, **dadurch gekennzeichnet, dass** der Kopf (15) des Interferenzelements (14) als eine oder mehrere Scheiben (21) ausgebildet ist, die zueinander reziprok beabstandet und parallel sind.

9. Vorrichtung (10) nach einem der vorstehenden Ansprüche, **dadurch gekennzeichnet, dass** der Behälter (11) eine gekrümmte oder kuppelförmige Bodenwand (11A) aufweist.

10. Vorrichtung (10) nach Anspruch 9, **dadurch gekennzeichnet, dass** sie einen Deckel (12) aufweist, dessen Wand gekrümmt oder kuppelförmig ist.

11. Helm (30), aufweisend eine innere Komponente (31), die ausgebildet ist, auf dem Kopf eines Benutzers aufzuliegen, und eine äußere Komponente (32), die um die innere Komponente (22) herum angeordnet ist, um diese zu umschließen und in Bezug auf diese beweglich zu sein, **dadurch gekennzeichnet, dass** er eine oder mehrere stoßdämpfende Vorrichtungen (10) nach einem der vorstehenden Ansprüche aufweist.

12. Helm (30) nach Anspruch 11, **dadurch gekennzeichnet, dass** der Behälter (11) der stoßdämpfenden Vorrichtung (10) an der inneren Komponente (31) befestigt ist und das Interferenzelement (14) an der äußeren Komponente (32) befestigt ist.

## Revendications

1. Dispositif d'amortissement (10), comprenant un récipient hermétiquement fermé (11) contenant un fluide d'amortissement (13), **caractérisé en ce qu'**il comprend un élément d'interférence (14) partiellement inséré mobile à l'intérieur dudit récipient (11) de sorte qu'une tête (15) de celui-ci est immergée dans ledit fluide d'amortissement (13), **en ce que** ledit récipient (11) comprend une paroi élastiquement déformable (12A), **et en ce que** ledit élément d'interférence (14) est amené à passer à travers ladite paroi élastiquement déformable (12A).

2. Dispositif (10) selon la revendication 1, **caractérisé en ce que** ledit fluide d'amortissement (13) est du type non newtonien.

3. Dispositif (10) selon la revendication 1, **caractérisé en ce que** ladite paroi élastiquement déformable (12A) comprend une pluralité de plis (18) concentriques les uns aux autres et avec ledit élément d'interférence (14).

4. Dispositif (10) selon la revendication 1, 2 ou 3, **caractérisé en ce que** ladite paroi élastiquement déformable (12A) est comprise dans un couvercle amovible (12) dudit récipient (11).

5. Dispositif (10) selon l'une quelconque des revendications précédentes, **caractérisé en ce qu'**il comprend un organe de serrage (17) configuré pour être inséré autour dudit élément d'interférence (14) à l'extérieur dudit récipient (11).

6. Dispositif (10) selon l'une quelconque des revendications précédentes, **caractérisé en ce que** ladite tête (15) dudit élément d'interférence (14) a une taille latérale plus grande que ledit élément d'interférence (14).

7. Dispositif (10) selon l'une quelconque des revendications précédentes, **caractérisé en ce que** ladite tête (15) dudit élément d'interférence (14) comprend une paroi d'extrémité (20) équipée d'une pluralité de protubérances (19).

8. Dispositif (10) selon l'une quelconque des revendications précédentes, **caractérisé en ce que** ladite tête (15) dudit élément d'interférence (14) est configurée comme un ou plusieurs disques (21) mutuellement espacés et parallèles les uns aux autres.

9. Dispositif (10) selon l'une quelconque des revendications précédentes, **caractérisé en ce que** ledit récipient (11) comprend une paroi de fond incurvée ou en forme de dôme (11A).

10. Dispositif (10) selon la revendication 9, **caractérisé en ce qu'**il comprend un couvercle (12) dont la paroi est incurvée ou en forme de dôme.

11. Casque (30) comprenant un composant interne (31) configuré pour être placé en appui sur la tête d'un utilisateur, et un composant externe (32) situé autour dudit composant interne (22) de manière à l'envelopper et à être mobile par rapport à lui, **caractérisé en ce qu'**il comprend un ou plusieurs dispositifs d'amortissement (10) selon l'une quelconque des revendications précédentes.

12. Casque (30) selon la revendication 11, **caractérisé en ce que** le récipient (11) dudit dispositif d'amortissement (10) est fixé audit composant interne (31) et l'élément d'interférence (14) est fixé audit composant externe (32).
